# FASCICULE DE BREVET EUROPEEN

(11) **EP 1 227 132 B1**
(45) Date de publication et mention de la délivrance du brevet: **16.06.2010**
(21) Numéro de dépôt: 02290019.5
(22) Date de dépôt: 07.01.2002
(51) Int. Cl.: C08L 77/00, C08L 77/02, C08L 77/06, C08L 77/12

(54) **Composition transparente à base de polyamide**
Transparente Zusammensetzung auf Polyamidbasis
Transparent polyamide composition

(30) Priorité: 26.01.2001 FR 0101110
(43) Date de publication de la demande: 31.07.2002
(73) Titulaire: ARKEMA FRANCE, 92700 Colombes (FR)
(72) Inventeur: Montanari, Thibaut, 27300 Bernay (FR); Recoquille, Christelle, 27550 Nassandres (FR)
(74) Mandataire: Delprat, Corinne

(56) Documents cités:
- EP-A- 0 070 001
- EP-A- 0 408 474
- EP-A- 0 628 602
- WO-A-97/46621

## Description

### [Domaine de l'invention]

La présente invention concerne une composition transparente à base de polyamide. La présente invention concerne aussi les objets obtenus à partir de cette composition et les procédés de préparation de tels objets. Les polyamides sont des polymères très utilisés pour leurs nombreuses propriétés. En effet les polyamides présentent certaines ou toutes des propriétés énumérées ci-après : transparence, résistance aux chocs, à la traction et/ou la compression, tenue élevée aux agressions extérieures, telles que froid, chaleur, agents chimiques, rayonnements notamment UV, et autres. Aussi a-t-on vu apparaître des objets à base de polyamides, tels que par exemple des montures de lunettes, boîtiers divers, équipements pour automobile, matériels chirurgical, emballage, articles de sport et skis en particulier le dessus du ski. Ces objets doivent le plus souvent porter des inscriptions diverses, comme les caractéristiques du produit vendu dans le cas d'un emballage réalisé en polyamide. Ces produits doivent aussi souvent être décorés.

Un exemple de produit devant être décoré est le ski en particulier le dessus. On a donc naturellement cherché à décorer les polyamides selon les techniques habituellement utilisées et notamment celle par sublimation. Cette technique, dite de décoration par sublimation ou transfert thermique, consiste à recouvrir l'objet à décorer d'une couche de pigments à une température comprise entre 80 et 220°C, et à chauffer l'ensemble à une température donnée. Les pigments sont dits sublimables, mais cette technique est efficace avec des pigments qui peuvent migrer dans la structure du polymère. En fait, l'homme de l'art comprend ce terme de "décoration par sublimation" sans qu'il soit nécessaire de développer plus en détail ici. La température à laquelle on porte l'objet à décorer doit être suffisamment élevée, pour provoquer la sublimation ou transfert thermique des pigments, qui peuvent alors pénétrer, par diffusion, dans la structure du polymère, si celui-ci présente une morphologie adéquate. Le polymère doit bien sûr résister à la température utilisée lors de la décoration par sublimation.

### [L'art antérieur et le problème technique]

Les polyamides de l'art antérieur ne présentent pas toujours les propriétés requises pour être décorés par sublimation. Si le polyamide est cristallin ou semi-cristallin, il résiste à des températures élevées et les conditions parfois sévères de mise en oeuvre de la décoration par sublimation peuvent être utilisées avec ce polyamide. Cependant, les polyamides cristallins ou semi-cristallins ne sont pas transparents et leur opacité les rend impropres à une utilisation lorsque la transparence est recherchée. Si le polyamide est amorphe, il est donc transparent et en raison de cette transparence pourrait convenir dans des applications où cette propriété de transparence est recherchée. Cependant, lorsque la température utilisée pour la sublimation est inférieure à la température de transition vitreuse, le polyamide ne présente pas une structure suffisamment désorganisée et les pigments sublimables diffusent difficilement dans la masse du polyamide. La couleur résultante est pâle et donc impropre à la commercialisation. Lorsque la température utilisée pour la sublimation est supérieure à la température de transition vitreuse, le polyamide se déforme de façon rédhibitoire et donc est impropre à l'usage auquel il est normalement destiné.

Les brevets FR-A-2 575 756 et FR-A-2 606 416 décrivent des compositions polyamides amorphes à base de BACM (bis-(4-aminocyclohexyl)-méthane), BAMCM (bis-(3-méthyl-4-aminocyclohexyl)-méthane), ou autres diamines cycloaliphatiques, d'acide iso- ou téréphtalique, et d'autres polyamides. Ces polyamides présentent des propriétés de transparence et sont utiles pour la fabrication d'objets moulés. Ce document décrit une température de moulage qui peut être aussi élevée que 310°C.

Les brevets JP-60-215053 et 60-215054 décrivent et revendiquent des alliages comprenant d'une part un polyamide transparent et d'autre part un polyamide cristallin. Le polyamide transparent est constitué de motifs aliphatiques en tant que composant monomère essentiel choisis parmi le lauryllactame, l'acide 12-aminododécanoïque ou 11-amino-undécanoïque, et des motifs cycliques. Les exemples donnés pour ces polyamides transparents font apparaître en tant que motifs cycliques une diamine cycloaliphatique, le bis-(4-aminocyclohexyl)-méthane et un diacide aromatique, l'acide isophtalique. Le polyamide cristallin est constitué de polyamide-12 et/ou -11, ou de copolyamide ayant comme monomère essentiel un motif 12 et/ou 11.

Le brevet FR-A-2 021 910 décrit des compositions de polyamides comprenant de 40 à 99% en poids d'un polyamide amorphe à base d'acides aromatiques et de 2,2,4- et/ou 2,4,4-triméthyl-hexaméthylène-diamine et 60 à 1% en poids d'un polyamide aliphatique. Les objets obtenus présentent une transparence, une bonne rigidité, sont résistants aux chocs et à l'eau. Les polyamides sont utilisés pour la fabrication par moulage d'objets creux tels que des bouteilles. Les températures utilisées sont des températures classiques.

Le brevet US-A-4 404 317 décrit des compositions de polyamides telles que 6,I/6,T/BACM,I/BACM,T qui présentent des propriétés utiles pour la fabrication d'objets. Ces polyamides sont obtenus par mélange à une température comprise entre 270 et 300°C. Les mélanges présentent, selon ce document, des propriétés de résistance aux solvants, de stabilité thermique, de conservation des propriétés mécaniques dans des conditions humides. US-A-4 404 317 décrit les conditions de mélange, telles que la température, pour divers polyamides; en particulier, il est recommandé de ne pas dépasser 300°C à cause de la dégradation du polyamide cristallin ainsi que du polyamide amorphe. Il est aussi connu que les polyamides cristallins (dont le PA-12 ou PA-6,12) présentent une température de dégradation de l'ordre de 270 DEG C, tant pour le moulage-injection que pour l'extrusion. Cette température peut être portée pour des temps très courts ou en présence d'un stabilisant à une température d'environ 300°C.

Le brevet EP 628602 décrit des mélanges de polyamide amorphe et de polyamide semi cristallin. Les exemples ont été réalisés sur une extrudeuse bivis Werner 30 équipée d'un profil malaxeur, à une température matière de 330 à 340°C, à partir d'une part de polyamide semi-cristallin PA-11 de viscosité inhérente 1,38 dl/g et d'autre part de polyamide semi-aromatique amorphe PA-12/BMACM, T/BMACM,I. Celui-ci est synthétisé par polycondensation à l'état fondu à partir de bis-(3-méthyl-4-aminocyclohexyl)-méthane (BMACM), de lauryllactame (L12) et d'acides iso- et téréphtalique (IA et TA) dans un rapport molaire 1/1/0,3/0,7. Ce polyamide amorphe présente une température de transition vitreuse de 170°C et une viscosité inhérente de 1,05 dl/g. Les mélanges à la sortie de la filière de l'extrudeuse Werner sont refroidis sous forme de jonc dans un bac rempli d'eau froide, découpés en granulés et étuvés à 80°C sous vide pendant 12 heures de façon à éliminer l'humidité.

L'art antérieur a décrit soit des polyamides semi cristallins, soit des polyamides amorphes soit encore leurs mélanges. Les polyamides semi cristallins et les polyamides amorphes ne conviennent pas pour les objets devant être décorés par sublimation. Quant aux mélanges de polyamides semi cristallin et de polyamide amorphe le polyamide amorphe contient toujours des motifs aromatiques, en général de l'acide isophtalique ou téréphtalique, ce qui oblige à utiliser des températures élevées pour leur mélange d'ou un risque de dégradation et un coût d'autant plus élevé que la température est élevée.

On a maintenant trouvé une composition transparente à base de polyamide constituée essentiellement d'un mélange de polyamide semi cristallin, d'un polyamide amorphe contenant des motifs qui sont des restes de diacides aromatiques, un polyamide souple et, éventuellement, d'un compatibilisant du polyamide semi cristallin et du polyamide amorphe. C'est à dire que par rapport à l'art antérieur dans lequel le mélange du polyamide aliphatique et du polyamide amorphe ne peut s'effectuer qu'à température élevée, on a trouvé que si on mélange simultanément un polyamide semi cristallin, un polyamide amorphe contenant des motifs qui sont des restes de diacides aromatiques, un polyamide souple et, éventuellement, un compatibilisant du polyamide semi cristallin et du polyamide amorphe, on obtient une composition transparente à une température de mélange (compoundage) plus faible que dans l'art antérieur et donc on ne degrade pas les produits. Un autre avantage est que les compositions sont plus souples tout en restant transparentes.

### [Brève description de l'invention]

La présente invention concerne une composition transparente comprenant en poids, le total étant 100%:
- 5 à 40% d'un polyamide amorphe (B) qui résulte de la condensation d'au moins une diamine éventuellement cycloaliphatique, d'au moins un diacide aromatique et éventuellement d'au moins un monomère choisi parmi :
   les acides alpha omega amino carboxyliques,
   les diacides aliphatiques,
   les diamines aliphatiques,
- jusqu'à 40% d'un polyamide souple (C) choisi parmi les copolymères à blocs polyamides et blocs polyéthers et les copolyamides, lesdits copolyamides étant définis comme des produits qui résultent :
   - soit de la condensation d'au moins un acide alpha oméga aminocarboxylique (ou un lactame), au moins une diamine et au moins un diacide carboxylique,
   - soit de la condensation d'au moins deux acides alpha oméga aminocarboxyliques (ou leurs lactames correspondants éventuels ou d'un lactame et de l'autre sous forme acide alpha oméga aminocarboxylique),
- 0 à 20% d'un compatibilisant (D) de (A) et (B), le compatibilisant (D) étant tout produit qui fait baisser la température nécessaire pour rendre le mélange de (A) et (B) transparent c'est à dire ayant un coefficient de transmission lumineuse supérieur ou égal à 50 %, mesuré à 560 nm et pour une épaisseur de 2 mm,
- (C)+(D) est compris entre 2 et 50%
- avec la condition que (B)+(C)+(D) n'est pas inférieur à 30%,
- le complément à 100% d'un polyamide (A) semi cristallin.

Le terme "transparent" correspond à un coefficient de transmission lumineuse supérieur ou égal à 50 %, mesuré à 560 nm et pour une épaisseur de 2 mm. Préférentiellement il est >= 80%.

Le terme "polyamide" employé dans la présente description couvre aussi les copolyamides, pouvant contenir des tiers monomères en une proportion n'affectant pas les qualités essentielles des polyamides.

Le terme "semi-cristallin" couvre les (co)polyamides présentant à la fois une température de transition vitreuse Tg et une température de fusion Tf.

Le terme "amorphe" couvre des polyamides qui passent à l'état liquide ou fondu donc qui peuvent se mettre en oeuvre, au dessus de leur Tg. Ces polymères n'ont a priori pas de Tf en DSC. Toutefois, ils peuvent en avoir une mais son intensité est alors négligeable et n'affecte pas le caractère essentiellement amorphe du polymère.

Les définitions selon la présente invention sont conformes à celles communément acceptées dans l'art. On se référera avantageusement à la publication "ENPLAs, Booklet on Engineering Plastics", section 2.1, pp12-13, Ed.1991, et publiée par "The Japan Engineering Association".

La composition de l'invention présente de nombreux avantages :

Elle est semi cristalline comme le polyamide (A) c'est à dire qu'on peut le décorer par sublimation; Les structures cristallines sont suffisamment petites pour que la composition soit transparente.

Elle n'est pas trop rigide comme les polyamides semi aromatiques de l'art antérieur. Son module de flexion peut être compris entre 1400 et 600 MPa, la mesure étant faite sur un échantillon conditionné 15 jours à 23°C et 50% RH (humidité relative). En effet le PA 11 a un module de flexion de 1000 MPa considéré comme moyen par comparaison avec un polyamide rigide de module de flexion de 2000 MPa et un polyamide souple de module de flexion de 500 MPa.

Elle est ductile, a une bonne tenue au choc et à la fissuration ainsi qu'une bonne résistance à l'abrasion. Un objet telle une feuille se prêtera bien aux diverses opérations de façonnage (formage à froid, emboutissage) qui peuvent être nécessaires pour obtenir un produit fini tel un ski.

De plus elle a une faible sensibilité à l'humidité, essentiellement dans la mesure où, pour (A), les monomères employés ont au moins 9 atomes de carbone, par exemple: PA11, PA12, PA10.12, coPA10/9.12. Grâce à la nature semi-cristalline de (A), elle a une bonne tenue chimique et au stress cracking, une bonne tenue au vieillissement.

Elle se fabrique facilement car la température à partir de laquelle il y a formation d'un matériau transparent est plus faible que la température de compoundage (malaxage à l'état fondu dans une extrudeuse ou un mélangeur) du polyamide semi cristallin (A) et du polyamide amorphe (B) en l'absence de (D). La température de compoundage est d'autant plus basse que la proportion de (D) dans la composition est plus élevée.

L'avantage de cette température plus faible est qu'il n'y a pas de dégradation, la composition ne jaunit pas, il n'y a pas ou peu de points noirs ni de gels et la composition est plus facilement recyclable (elle pourra subir plus facilement une nouvelle mise en oeuvre).

Elle se met en oeuvre, typiquement par extrusion, très aisément. Les propriétés du matériau fondu sont adéquates (viscosité suffisante) et stables (pas de fluctuation lors de la production de l'objet), il n'y a pas de fumées ni de dépôt, contrairement à certaines compositions polyamide transparentes de l'art antérieur.

L'invention concerne aussi les objets constitués de la composition de l'invention tels que les plaques, les films, les feuilles, les tubes, les profilés, les objets obtenus par injection et en particulier les films et les feuilles qu'on colle ensuite sur les skis.

L'invention concerne aussi les objets précédents décorés, par exemple par sublimation, et recouverts d'une couche de protection transparente constituée de la composition de l'invention.

### [Description détaillée de l'invention]

**S'agissant du polyamide (A) semi cristallin** on peut citer (i) les polyamide aliphatiques qui sont les produits de condensation d'un acide alpha omega amino carboxylique aliphatique, d'un lactame ou les produits de condensation d'une diamine aliphatique et d'un diacide aliphatique et (ii) les autres polyamides pourvu qu'ils soient semi cristallins. Parmi ces autres polyamides semi cristallins on préfère ceux qui ont des structures cristallines suffisamment petites pour être proches de la transparence, à titre d'exemple on peut citer le PA PACM-12 dans lequel PACM désigne le para amino dicyclohexylméthane et 12 le diacide en C 12.

A titre d'exemple d'acide alpha omega amino carboxylique aliphatique on peut citer les acides aminocaproïques, amino-7-heptanoïque, amino-11-undécanoïque et amino-12-dodécanoïque. A titre d'exemple de lactame on peut citer le caprolactame, l'oenantholactame et le lauryllactame. A titre d'exemple de diamines aliphatiques on peut citer l'hexaméthylènediamine, la dodécaméthylènediamine et la triméthylhexaméthylène diamine. A titre d'exemple de diacides aliphatiques on peut citer les acides adipique, azélaïque, subérique, sébacique et dodécanedicarboxylique.

Parmi les polyamides aliphatiques, on peut citer, à titre d'exemple et de façon non limitative, les polyamides suivants: polycaprolactame (PA-6); polyundécanamide (PA11); polylauryllactame (PA-12); polybutylène adipamide (PA-4,6); polyhexaméthylène adipamide (PA-6,6); polyhexaméthylène azélamide (PA-6,9); polyhexaméthylène sébaçamide (PA-6,10); polyhexaméthylène dodécanamide (PA-6,12); polydécaméthylène dodécanamide (PA-10,12); polydécaméthylène sébaçanamide (PA-10,10) et le polydodecaméthylène dodécanamide (PA-12,12).

Avantageusement (A) provient de la condensation d'un lactame ayant au moins 9 atomes de carbone, d'un acide alpha omega amino carboxylique ayant au moins 9 atomes de carbone ou d'une diamine et d'un diacide tels que la diamine ou le diacide ont au moins 9 atomes de carbone. Avantageusement (A) est le PA 11 et le PA 12 et de préférence le PA 12. On ne sortirait pas du cadre de l'invention si (A) était un mélange de polyamides aliphatiques.

Selon une autre forme avantageuse (A) est un polyamide equilibré. On rappelle ci dessous les appellations des polyamides selon leurs extrémités.

Les polyamides selon leur procédé de fabrication et /ou le limiteur de chaîne utilisé peuvent avoir des excès de terminaisons acides, amines ou même avoir une part de terminaisons alkyles ou autres par exemple aryle ou tout autre fonction, découlant de la structure du limiteur choisi. L'excès de terminaisons acides proviennent d'un limiteur de chaîne diacide, L'excès de terminaisons amines proviennent d'un limiteur de chaîne diamine. Un limiteur de chaîne amine primaire conduit à une chaîne polyamide ayant une extrémité alkyle et une extrémité amine.

Nous appelons polyamide diamine, PAdiNH2, un polyamide qui répond aux critères suivants :
* possède une certaine quantité de chaînes terminées de part et d'autre par un groupement amine (NH2)
* la quantité de chaînes terminées de part et d'autre par un groupement amine (NH2) est supérieure à celle des chaînes diacide (s'il y en a)
* la concentration en groupes amine est globalement supérieure à la concentration en groupes acide.
* un PAdiNH2 est obtenu en ajoutant une diamine comme limiteur de chaîne ou, dans le cas des polyamides à base de diamine et de diacide tel que par exemple le PA6-6, en ajoutant plus de comonmère diamine que de comonomère diacide.

Ces polyamides sont donc aussi appelés par simplification PA diamine ou PAdiNH2.

Un polyamide est appelé diacide pour les raisons opposées.

Un polyamide est équilibré si
* on n'a pas rajouté de limiteur ou d'excès d'un des comonomères
* si la concentration en amine et en acide est essentiellement équivalente.

Pour déterminer la nature des extrémités d'un polyamide et du pourcentage de chaînes ayant ces terminaisons on peut utiliser les méthodes connues de détermination des masses molaires telles que par exemple la SEC (Steric Exclusion chromatography) et les méthodes de dosage des fonctions amines et acides. Dans la présente demande le terme SEC désigne la mesure des masses moléculaires de polymères par chromatographie d'exclusion stérique, cette technique et plus particulièrement son application aux polyamides et aux polyamides blocs polyethers est décrite dans "Journal of Liquid Chromatography, 11(16), 3305-3319 (1988)". Quant à la détermination des terminaisons, par exemple pour le PA 6, on dissout l'échantillon dans une solution de phénol dans le méthanol et on titre les amines à l'aide d'une solution d'acide paratoluenesulphonique dans le méthanol. Pour les extrémités acides, toujours pour le PA 6, on dissout l'échantillon dans l'alcool benzilique et on titre les fonctions acides à l'aide d'une solution de potasse dans l'alcool benzylique.

**S'agissant du polyamide amorphe (B)** il résulte essentiellement de la condensation d'au moins une diamine éventuellement cycloaliphatique et d'au moins un diacide aromatique. Des exemples de diamines aliphatiques ont été citées plus haut, les diamines cycloaliphatiques peuvent être les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP). Les autres diamines couramment utilisées peuvent être l'isophoronediamine (IPDA) et la 2,6-bis-(aminométhyl)-norbornane (BAMN). A titre d'exemple de diacides aromatiques on peut citer les acides téréphtalique (T) et isophtalique (I).

Le polyamide amorphe (B) peut contenir éventuellement au moins un monomère choisi parmi:
les acides alpha omega amino carboxyliques,
les diacides aliphatiques,
les diamines aliphatiques,
ces produits ont été décrits plus haut.

A titre d'exemple de (B) on peut citer le polyamide semi-aromatique amorphe PA-12/BMACM, TA/BMACM,IA synthétisé par polycondensation à l'état fondu à partir de bis-(3-méthyl-4-aminocyclohexyl)-méthane (BMACM), de lauryllactame (L12) et d'acides iso- et téréphtalique (IA et TA). On ne sortirait pas du cadre de l'invention si (B) était un mélange de plusieurs polyamides amorphes.

**S'agissant du polyamide souple (C) et d'abord les copolymères à blocs polyamides et blocs polyethers** Ils résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. Les copolymères (C) sont avantageusement de ce type.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

La masse molaire en nombre M̅n̅ des séquences polyamides est comprise entre 300 et 15 000 et de préférence entre 600 et 5 000. La masse M̅n̅ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

On peut distinguer trois types de copolymères à blocs polyamides et polyéthers. Selon un premier type les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne. A titre d'exemple d'acides alpha oméga aminocarboxyliques on peut citer l'acide aminoundecanoïque, à titre d'exemple de lactame on peut citer le caprolactame et le lauryllactame, à titre d'exemple de diacide carboxylique on peut citer l'acide adipique, l'acide decanedioïque et l'acide dodecanedioïque, à titre d'exemple de diamine on peut citer l'hexamethylène diamine. Avantageusement les blocs polyamides sont en polyamide 12 ou en polyamide 6.

Selon une deuxième type les séquences polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone et sont de faible masse c'est-à-dire M̅n de 400 à 1000. A titre d'exemple d'acide alpha oméga aminocarboxylique on peut citer l'acide aminoundécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-(CH₂)₁₀-COOH. A titre d'exemple de lactame on peut citer le caprolactame et le lauryllactame. Des séquences polyamides obtenues par condensation du lauryllactame en présence d'acide adipique ou d'acide dodécanédioïque et de masse M̅n 750 ont une température de fusion de 127 - 130°C.

Selon un troisième type les séquences polyamides résultent de la condensation d'au moins un acide alpha oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut. La diamine peut être une diamine aliphatique ayant de 6 à 12 atomes, elle peut être arylique et/ou cyclique saturée. A titre d'exemples on peut citer l'hexaméthylènediamine, la pipérazine, l'1-aminoethylpipérazine, la bisaminopropylpipérazine, la tetraméthylène diamine, l'octaméthylène diamine, la decaméthylène diamine, la dodecaméthylène diamine, le 1,5 diaminohexane, le 2,2,4-triméthyl-1,6-diamino-hexane, les polyols diamine, l'isophorone diamine (IPD), le méthyle pentaméthylènediamine (MPDM), la bis(aminocyclohéxyl) méthane (BACM), la bis(3-méthyl-4 aminocyclohéxyl) méthane (BMACM).

Dans les deuxième et troisième types les différents constituants de la séquence polyamide et leur proportion sont choisis pour obtenir une température de fusion inférieure à 150°C et avantageusement comprise entre 90 et 135°C.

Des copolyamides à basse température de fusion sont décrits dans les brevets US 4 483 975, DE 3 730 504, US 5 459 230 on reprend les mêmes proportions des constituants pour les blocs polyamides.

Les blocs polyether peuvent représenter 5 à 85 % en poids du copolymère à blocs polyamides et polyéthers. Les blocs polyether peuvent contenir d'autres motifs que les motifs oxyde d'éthylène tels que par exemple de l'oxyde de propylène ou du polytetrahydrofurane (qui conduit aux enchaînements polytetraméthylène glycol). On peut aussi utiliser simultanément des blocs PEG c'est à dire ceux constitués de motifs oxyde d'éthylène, des blocs PPG c'est à dire ceux constitués de motifs oxyde de propylène et des blocs PTMG c'est à dire ceux constitués de motifs tetraméthylène glycol appelés aussi polytetrahydrofurane. On utilise avantageusement des blocs PPG ou PTMG. La quantité de blocs polyether dans ces copolymères à blocs polyamides et polyéthers est avantageusement de 10 à 50% en poids du copolymère et de préférence de 35 à 50%.

Les copolymères à blocs polyamides et blocs polyether peuvent être préparés par tout moyen permettant d'accrocher les blocs polyamide et les blocs polyéther. En pratique on utilise essentiellement deux procédés l'un dit en 2 étapes, l'autre en une étape.

Le procédé en 2 étapes consiste d'abord à préparer les blocs polyamide à extrémités carboxyliques par condensation des précurseurs de polyamide en présence d'un diacide carboxylique limiteur de chaîne puis dans une deuxième étape à ajouter le polyéther et un catalyseur.

Le polyamide à extrémités acide carboxylique ayant été préparé on ajoute ensuite le polyéther et un catalyseur. On peut ajouter le polyéther en une ou plusieurs fois, de même pour le catalyseur.

Le catalyseur est défini comme étant tout produit permettant de faciliter la liaison des blocs polyamide et des blocs polyéther par estérification. Le catalyseur est avantageusement un dérivé d'un métal (M) choisi dans le groupe formé par le titane, le zirconium et le hafnium.

Ce procédé et ces catalyseurs sont décrits dans les brevets US 4,332,920, US 4,230,838, US 4,331,786, US 4,252,920, JP 07145368A, JP 06287547A, et EP 613919.

S'agissant du procédé en une étape on mélange tous les réactifs utilisés dans le procédé en deux étapes c'est-à-dire les précurseurs de polyamide, le diacide carboxylique limiteur de chaîne, le polyéther et le catalyseur. Il s'agit des mêmes réactifs et du même catalyseur que dans le procédé en deux étapes décrit plus haut. Si les précurseurs de polyamide ne sont que des lactames il est avantageux d'ajouter un peu d'eau.

Le copolymère a essentiellement les mêmes blocs polyéthers, les mêmes blocs polyamides, mais aussi une faible partie des différents réactifs ayant réagi de façon aléatoire qui sont répartis de façon statistique le long de la chaîne polymère.

Avantageusement, (C) sera choisi de tel sorte qu'il permette "en prime" de mettre moins de (B) pour obtenir une composition transparente.

**S'agissant du polyamide souple (C) constitué de copolyamide** il résulte soit de la condensation d'au moins un acide alpha oméga aminocarboxylique (ou un lactame), au moins une diamine et au moins un diacide carboxylique soit de la condensation d'au moins deux acides alpha oméga aminocarboxyliques (ou leurs lactames correspondants eventuels ou d'un lactame et de l'autre sous forme acide alpha oméga aminocarboxylique). Ces constituants ont déjà été définis plus haut.

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12). Les copolyamides préférés sont des copolyamides avec un caractère copolymère marqué, c'est à dire avec des proportions essentiellement équivalentes des différents comonomères, ce qui conduit aux propriétés les plus éloignés des homopolymères polyamides correspondants. On ne sortirait pas du cadre de l'invention si (C) était un mélange de plusieurs copolymères à blocs polyamides et blocs polyethers ou de plusieurs copolyamides ou toutes combinaison de ces possibilités.

**S'agissant du compatibilisant (D) de (A) et (B)** c'est tout produit qui fait baisser la température nécessaire pour rendre le mélange de (A) et (B) transparent. Avantageusement c'est un polyamide. Par exemple si (A) est le PA 12 alors (D) est le PA 11. De préférence c'est un polyamide aliphatique catalysé.

S'agissant du polyamide (D) catalysé c'est un polyamide comme décrit plus haut pour (A) mais contenant un catalyseur de polycondensation tel que un acide minéral ou organique, par exemple de l'acide phosphorique. Le catalyseur peut être ajouté dans le polyamide (D) après sa préparation par un procédé quelconque ou, tout simplement et c'est ce que l'on préfère, être le reste du catalyseur utilisé pour sa préparation. "Polyamide catalysé" veut dire que la chimie va se poursuivre au delà des étapes de synthèse de la résine de base et donc au cours des étapes ultérieures de la préparation des compositions de l'invention. Des réactions de polymérisation et/ou dépolymerisation pourront avoir très substantiellement lieu au cours du mélange des polyamides (A) et (B) et (D) pour préparer les compositions de la présente invention. Typiquement, la demanderesse pense (sans être liée par cette explication) que l'on continue à polymériser (allongement de chaîne) et à brancher les chaînes (par exemple pontage par le biais de l'acide phosphorique). De plus ceci peut être considéré comme une tendance au rééquilibrage de l'équilibre de polymérisation, donc une sorte d'homogénéisation. Il est cependant recommandé de bien sécher (et avantageusement de bien maîtriser les niveaux d'humidité) les polyamides pour éviter des dépolymerisations. La quantité de catalyseur peut être comprise entre 5 ppm et 15000 ppmd'acide phosphorique par rapport la résine (D). Pour d'autres catalyseurs, par exemple l'acide borique, les teneurs seront différentes et peuvent être choisies de façon appropriée selon les techniques habituelles de la polycondensation des polyamides.

Avantageusement la proportion de (B) est comprise entre 10 et 40% et de préférence entre 20 et 40%. Avantageusement la proportion de (C)+(D) est comprise entre 5 et 40% et de préférence 10 et 40%.

Les compositions de l'invention sont fabriquées par mélange à l'état fondu des différents constituants (extrudeuses bivis, BUSS®, monovis) selon les techniques habituelles des thermoplastiques. Les compositions peuvent être granulées en vue d'une utilisation ultérieure (il suffit de les refondre) ou bien de suite injectées dans un moule ou un dispositif d'extrusion ou de coextrusion pour fabriquer des tubes, des plaques, des films ou des profilés. L'homme de métier peut ajuster facilement la température de compoundage pour obtenir un matériau transparent, en règle générale il suffit d'augmenter la température de compoundage par exemple vers 280 ou 290°C.

Les compositions de l'invention peuvent comprendre des stabilisants, des antioxydants, des anti UV.

### [Exemples]

On a utilisé les produits suivants :
**PASA :** polyamide semi-aromatique amorphe PA-12/BMACM, TA/BMACM,IA synthétisé par polycondensation à l'état fondu à partir de bis-(3-méthyl-4-aminocyclohexyl)-méthane (BMACM), de lauryllactame (L12) et d'acides iso- et téréphtalique (IA et TA) dans un rapport molaire 1/1/0,3/0,7.
**PA 11** : polyamide 11 de *M̅w̅* 45000 à 55000.
**PA 11 cata :** un polyamide 11 de *M̅w̅* 45 000 à 55 000 et contenant 3700 ppm de catalyseur acide phosphorique.
**PEBA 12** : un copolymère à blocs PA 12 de *M̅n̅* 4000 et blocs PTMG de *M̅n̅* 1000 et de MFI 4 à 10 (g/10 min à 235°C sous 1 kg ).
**PEBA 6** : un copolymère à blocs PA 6 de *M̅n̅* 1350 et blocs PTMG de *M̅n̅* 650 et de MFI 3 à 10 (g/10 min à 235°C sous 1 kg ).
**PA 12** : un polyamide 12 de *M̅w̅* 45 000 à 55 000.

Les résultats sont reportés sur le tableau 1 suivant. La cristallinité est exprimée par l'enthalpie de fusion divisée par une constante. Le module de flexion est mesuré sur un échantillon conditionné 15 jours à 23°C et 50% RH (humidité relative). Dans la colonne "exemples" le No suivi de "c" veut dire que c'est un exemple comparatif.

**Tableau 1**

| exemples | (A) PA semi-cristallin | (B) PA amorphe PASA | (C) Polyamide souple | (D) Compatibisant | Transmission lumineuse | T° de compoundage | Tf | Cristallinite | Module de flexion |
|---|---|---|---|---|---|---|---|---|---|
| 1 c | PA11 | | | | <50% | | 189 | 22% | 1100 |
| 2 c | PA11 | 30% | | | > 80% | 320 | | | 1350 |
| 3 | PA11 | 30% | 20%PEBA12 | | > 80% | 320 | | | 1050 |
| 4 | PA11 | 25% | 15%PEBA12 | | >80% | 320 | | | 1100 |
| 5 c | PA12 | | | | < 50% | | 178 | 24% | 1200 |
| 6 c | PA12 | 30% | | | > 80% | 350 | 328 | | 1400 |
| 7 c | PA12 | 30% | | | <30% | 320 | | | |
| 8 c | PA12 | 30% | | 10% PA11 | > 80% | 335 | | | 1350 |
| 9 c | PA12 | 30% | | 10% PA11 cata | > 80% | 320 | | | 1350 |
| 10 | PA12 | 15% | 15%PEBA6 | 10% PA11cata | > 80% | 320 | | | 800 |
| 11 c | PA12 | 15% | | 10% PA11cata | < 75% | | | | |
| 12 c | PA12 | 25% | | 24% PA11 cata | > 80% | 320 | | | 1200 |
| 13 | PA12 | 15% | 10%PESA6 | 24% PA11 cata | > 80% | 320 | | | 850 |

## Revendications

1. Composition transparente comprenant en poids, le total étant 100%:
• 5 à 40% d'un polyamide amorphe (B) qui résulte de la condensation d'au moins une diamine, d'au moins un diacide aromatique et, de manière optionnelle, d'au moins un monomère choisi parmi :
les acides alpha omega amino carboxyliques,
les diacides aliphatiques,
les diamines aliphatiques,
• jusqu'à 40% d'un polyamide souple (C) choisi parmi les copolymères à blocs polyamides et blocs polyéthers et les copolyamides, lesdits copolyamides étant définis comme des produits qui résultent :
- soit de la condensation d'au moins un acide alpha oméga aminocarboxylique (ou un lactame), au moins une diamine et au moins un diacide carboxylique,
- soit de la condensation d'au moins deux acides alpha oméga aminocarboxyliques (ou leurs lactames correspondants éventuels ou d'un lactame et de l'autre sous forme acide alpha oméga aminocarboxyl ique),
• 0 à 20% d'un compatibilisant (D) de (A) et (B), le compatibilisant (D) étant tout produit qui fait baisser la température nécessaire pour rendre le mélange de (A) et (B) transparent c'est à dire ayant un coefficient de transmission lumineuse supérieur ou égal à 50 %, mesuré à 560 nm et pour une épaisseur de 2 mm,
• (C)+(D) est compris entre 2 et 50%,
• avec la condition que (B)+(C)+(D) n'est pas inférieur à 30%,
• le complément à 100% d'un polyamide (A) semi cristallin.

2. Composition selon la revendication 1, **caractérisée en ce que** (A) provient de la condensation d'un lactame ayant au moins 9 atomes de carbone, d'un acide alpha omega aminocarboxylique ayant au moins 9 atomes de carbone ou d'une diamine et d'un diacide tels que la diamine ou le diacide ont au moins 9 atomes de carbone.

3. Composition selon la revendication 1 ou 2, **caractérisée en ce que** (A) est le PA 11 ou le PA 12.

4. Composition selon l'une quelconque des revendications 1 à 3, **caractérisée en ce que** (A) est un polyamide équilibré.

5. Composition selon l'une quelconque des revendications 1 à 4, **caractérisée en ce que** le polyamide amorphe (B) comprend une diamine cycloaliphatique.

6. Composition selon l'une quelconque des revendications 1 à 5, **caractérisée en ce que** (C) est un copolymère à blocs polyamides et blocs polyéthers constitué de blocs PA 6 ou PA 12, les blocs polyéthers étant en PTMG.

7. Composition selon l'une quelconque des revendications 1 à 6, **caractérisée en ce que** (A) est le PA 12 et (D) le PA 11.

8. Composition selon l'une quelconque des revendications 1 à 7, **caractérisée en ce que** le compatibilisant (D) est un polyamide contenant un catalyseur de polycondensation tel qu'un acide minéral ou organique.

9. Composition selon la revendication 8, **caractérisée en ce que** (A) est le PA 12 et (D) le PA 11 contenant un catalyseur de polycondensation tel qu'un acide minéral ou organique.

10. Composition selon l'une quelconque des revendications 1 à 9, **caractérisée en ce que** la proportion de (B) est comprise entre 20 et 40%.

11. Composition selon l'une quelconque des revendications 1 à 10, **caractérisée en ce que** la proportion de (C)+(D) est comprise entre 5 et 40%.

12. Composition selon la revendication 11, **caractérisée en ce que** la proportion de (C)+(D) est comprise entre 10 et 40%.

13. Composition selon l'une quelconque des revendications 1 à 12, **caractérisée en ce qu'**elle comprend en outre des stabilisants, des antioxydants, des anti-UV.

14. Objet constitué de la composition selon l'une quelconque des revendications 1 à 13.

15. Objet selon la revendication 14, **caractérisé en ce qu'**il se présente sous la forme d'une plaque, d'un film, d'une feuille, d'un tube ou d'un profilé.

16. Objet selon la revendication 14 ou 15, tel que ski, qui est décoré et recouvert d'une couche de protection transparente constituée de la composition selon l'une quelconque des revendications 1 à 13.

17. Objet décoré selon la revendication 16, **caractérisé en ce que** la décoration est réalisée au moyen de la technique de décoration par sublimation.

18. Procédé de fabrication d'un objet selon la revendication 14 ou 15, **caractérisé en ce qu'**il comprend une étape de mélange de la composition selon l'une quelconque des revendications 1 à 13 et une étape de transformation consistant en une injection, une extrusion ou une coextrusion.

## Claims

1. Transparent composition comprising, by weight, the total being 100%:
■ 5% to 40% of an amorphous polyamide (B) which results from the condensation of at least one diamine, of at least one aromatic diacid and, optionally, of at least one monomer chosen from:
α,ω-aminocarboxylic acids;
aliphatic diacids;
aliphatic diamines;
■ up to 40% of a flexible polyamide (C) chosen from copolymers containing polyamide blocks and polyether blocks and copolyamides, said copolyamides being defined as products that result:
- either from the condensation of at least one α,ω-aminocarboxylic acid (or a lactam), at least one diamine and at least one dicarboxylic acid;
- or from the condensation of at least two α,ω-aminocarboxylic acids (or their optional corresponding lactams or of one lactam and of the other in α,ω-aminocarboxylic acid form);
■ 0% to 20% of a compatibilizer (D) for (A) and (B), the compatibilizer (D) being any product that lowers the temperature necessary for rendering the mixture of (A) and (B) transparent, that is to say, having a light transmission coefficient greater than or equal to 50%, measured at 560 nm and for a thickness of 2 mm;
■ (C) + (D) is between 2% and 50%;
■ with the condition that (B) + (C) + (D) is not less than 30%;
■ the remainder to 100% being a semicrystalline polyamide (A).

2. Composition according to Claim 1, **characterized in that** (A) is derived from the condensation of a lactam containing at least 9 carbon atoms, an α,ω-aminocarboxylic acid containing at least 9 carbon atoms or a diamine and a diacid such that the diamine or the diacid contain at least 9 carbon atoms.

3. Composition according to Claim 1 or 2, **characterized in that** (A) is PA-11 or PA-12.

4. Composition according to any one of Claims 1 to 3, **characterized in that** (A) is an equilibrated polyamide.

5. Composition according to any one of Claims 1 to 4, **characterized in that** the amorphous polyamide (B) comprises a cycloaliphatic diamine.

6. Composition according to any one of Claims 1 to 5, **characterized in that** (C) is a copolymer containing polyamide blocks and polyether blocks, which is constituted of PA-6 or PA-12 blocks, the polyether blocks being PTMG blocks.

7. Composition according to any one of Claims 1 to 6, **characterized in that** (A) is PA-12 and (D) is PA-11.

8. Composition according to any one of Claims 1 to 7, **characterized in that** the compatibilizer (D) is a polyamide containing a polycondensation catalyst such as a mineral or organic acid.

9. Composition according to Claim 8, **characterized in that** (A) is PA-12 and (D) is PA-11 containing a polycondensation catalyst such as a mineral or organic acid.

10. Composition according to any one of Claims 1 to 9, **characterized in that** the proportion of (B) is between 20% and 40%.

11. Composition according to any one of Claims 1 to 10, **characterized in that** the proportion of (C)+(D) is between 5% and 40%.

12. Composition according to Claim 11, **characterized in that** the proportion of (C)+(D) is between 10% and 40%.

13. Composition according to any one of Claims 1 to 12, **characterized in that** it also comprises stabilizers, antioxidants and UV stabilizers.

14. Article constituted of the composition according to any one of Claims 1 to 13.

15. Article according to Claim 14, **characterized in that** it is in the form of a plate, film, sheet, tube or profile.

16. Article according to Claim 14 or 15, such as a ski, which is decorated and covered with a transparent protective layer constituted of the composition according to any one of Claims 1 to 13.

17. Decorated article according to Claim 16, **characterized in that** the decoration is created by means of a sublimation decorative technique.

18. Process for manufacturing an article according to Claim 14 or 15, **characterized in that** it comprises a step of mixing the composition according to any one of Claims 1 to 13 and a conversion step that consists of an injection-moulding, extrusion or coextrusion operation.

## Patentansprüche

1. Transparente Zusammensetzung, enthaltend, bezogen auf das Gewicht, wobei sich die Summe auf 100% beläuft:
• 5 bis 40% eines amorphen Polyamids (B), das sich aus der Kondensation mindestens eines Diamins, mindestens einer aromatischen Disäure und gegebenenfalls mindestens eines unter
alpha,omega-Aminocarbonsäuren,
aliphatischen Disäuren und
aliphatischen Diaminen
ausgewählten Monomers ergibt;
• bis zu 40% eines flexiblen Polyamids (C), ausgewählt aus Copolymeren mit Polyamidblöcken und Polyetherblöcken und Copolyamiden, wobei die Copolyamide als Produkte definiert sind, die sich:
- entweder aus der Kondensation mindestens einer alpha,omega-Aminocarbonsäure (oder eines Lactams), mindestens eines Diamins und mindestens einer Dicarbonsäure
- oder aus der Kondensation von mindestens zwei alpha,omega-Aminocarbonsäuren (oder ihren eventuellen entsprechenden Lactamen oder einem Lactam und dem anderen in alpha,omega-Aminocarbonsäure-Form)
ergeben,
• 0 bis 20% eines Verträglichkeitsvermittlers (D) für (A) und (B), bei dem es sich um ein beliebiges Produkt handelt, das die Temperatur herabsetzen kann, die notwendig ist, um die Mischung von (A) und (B) transparent, d.h. mit einem bei 560 nm und für eine Dicke von 2 mm gemessenen Lichtdurchlässigkeitskoeffizienten größer gleich 50%, zu machen,
• (C) + (D) zwischen 2 und 50% liegt,
• mit der Maßgabe, daß (B) + (C) + (D) nicht kleiner als 30% ist,
• Rest auf 100% teilkristallines Polyamid (A).

2. Zusammensetzung nach Anspruch 1, **dadurch gekennzeichnet, daß** (A) aus der Kondensation eines Lactams mit mindestens 9 Kohlenstoffatomen, einer alpha, omega-Aminocarbonsäure mit mindestens 9 Kohlenstoffatomen oder eines solchen Diamins und einer solchen Disäure, daß das Diamin oder die Disäure mindestens 9 Kohlenstoffatome enthalten, stammt.

3. Zusammensetzung nach Anspruch 1 oder 2, **dadurch gekennzeichnet, daß** es sich bei (A) um PA-11 oder PA-12 handelt.

4. Zusammensetzung nach einem der Ansprüche 1 bis 3, **dadurch gekennzeichnet, daß** es sich bei (A) um ein ausbalanciertes Polyamid handelt.

5. Zusammensetzung nach einem der Ansprüche 1 bis 4, **dadurch gekennzeichnet, daß** das amorphe Polyamid (B) ein cycloaliphatisches Diamin umfaßt.

6. Zusammensetzung nach einem der Ansprüche 1 bis 5, **dadurch gekennzeichnet, daß** es sich bei (C) um ein Copolymer mit Polyamidblöcken und Polyetherblöcken handelt, das aus PA-6- oder PA-12-Blöcken aufgebaut ist, wobei die Polyetherblöcke aus PTMG sind.

7. Zusammensetzung nach einem der Ansprüche 1 bis 6, **dadurch gekennzeichnet, daß** es sich bei (A) um PA-12 und bei (D) um PA-11 handelt.

8. Zusammensetzung nach einem der Ansprüche 1 bis 7, **dadurch gekennzeichnet, daß** es sich bei dem Verträglichkeitsvermittler (D) um ein Polyamid, das einen Polykondensationskatalysator, wie eine anorganische oder organische Säure, enthält, handelt.

9. Zusammensetzung nach Anspruch 8, **dadurch gekennzeichnet, daß** es sich bei (A) um PA-12 und bei (D) um PA-11, das einen Polykondensationskatalysator, wie eine anorganische oder organische Säure, enthält, handelt.

10. Zusammensetzung nach einem der Ansprüche 1 bis 9, **dadurch gekennzeichnet, daß** der Anteil von (B) zwischen 20 und 40% liegt.

11. Zusammensetzung nach einem der Ansprüche 1 bis 10, **dadurch gekennzeichnet, daß** der Anteil von (C)+(D) zwischen 5 und 40% liegt.

12. Zusammensetzung nach Anspruch 11, **dadurch gekennzeichnet, daß** der Anteil von (C)+(D) zwischen 10 und 40% liegt.

13. Zusammensetzung nach einem der Ansprüche 1 bis 12, **dadurch gekennzeichnet, daß** sie außerdem Stabilisatoren, Antioxidantien und UV-Stabilisatoren enthält.

14. Gegenstand aus der Zusammensetzung nach einem der Ansprüche 1 bis 13.

15. Gegenstand nach Anspruch 14, **dadurch gekennzeichnet, daß** er in Form einer Platte, eines Films, einer Folie, eines Rohrs oder eines Profils vorliegt.

16. Gegenstand nach Anspruch 14 oder 15, wie ein Ski, der dekoriert und mit einer transparenten Schutzschicht aus der Zusammensetzung nach einem der Ansprüche 1 bis 13 bedeckt ist.

17. Dekorierter Gegenstand nach Anspruch 16, **dadurch gekennzeichnet, daß** die Dekoration mit Hilfe der Technik der Dekoration durch Sublimation durchgeführt wird.

18. Verfahren zur Herstellung eines Gegenstands nach Anspruch 14 oder 15, **dadurch gekennzeichnet, daß** es einen Schritt des Mischens der Zusammensetzung nach einem der Ansprüche 1 bis 13 und einen aus einer Einspritzung, einer Extrusion oder einer Coextrusion bestehenden Umwandlungsschritt umfaßt.
